# EUROPEAN PATENT SPECIFICATION

(11) **EP 0 581 275 B1**
(45) Date of publication and mention of the grant of the patent: **04.03.1998**
(21) Application number: 93112093.5
(22) Date of filing: 28.07.1993
(51) Int. Cl.: H01M 4/62

(54) **A pasted type nickel electrode for an alkaline storage battery and an alkaline storage battery**
Pastöse Nickelelektrode für alkalische Sammlerbatterie und alkalische Sammlerbatterie
Electrode de nickel du type pâteux pour accumulateur alcalin et accumulateur alcalin

(30) Priority: 28.07.1992 JP 220678/92; 24.12.1992 JP 357500/92
(43) Date of publication of application: 02.02.1994
(73) Proprietor: FURUKAWA DENCHI KABUSHIKI KAISHA, Yokohama-shi, Kanagawa-ken (JP)
(72) Inventor: Furukawa, Jun, c/o Iwakijigyosho, Furukawa, Iwaki-shi, Fukushima-ken (JP)
(74) Representative: Schmidt-Evers, Jürgen, Dipl.-Ing.

(56) References cited:
- EP-A- 0 490 791
- PATENT ABSTRACTS OF JAPAN vol. 9, no. 318 (E-366)13 December 1985 & JP-A-60 151 964 (NIHON DENCHI K.K.) 10 August 1985
- PATENT ABSTRACTS OF JAPAN vol. 9, no. 15 (E-291)22 January 1985 & JP-A-59 163 762 (NIHON DENCHI K.K.) 14 September 1984
- PATENT ABSTRACTS OF JAPAN vol. 9, no. 15 (E-291)22 January 1985 & JP-A-59 165 373 (NIHON DENCHI K.K.) 18 September 1984
- PATENT ABSTRACTS OF JAPAN vol. 15, no. 428 (E-1128)30 October 1991 & JP-A-03 179 664 (FURUKAWA BATTERY CO. LTD.) 5 August 1991

## Description

The invention relates an alkaline storage battery comprising a pasted type nickel positive electrode.

A conventional pasted type nickel electrode for an alkaline storage battery has been developed as a high-capacity positive electrode to replace a sintered type nickel electrode and manufactured as follows. Namely, a cobalt or nickel powder that is to serve as an electroconductive agent is added to and mixed with a nickel hydroxide powder. An aqueous solution of a thickener such as carboxymethyl cellulose (CMC) is added to the mixture and kneaded to make the mixture pasty. The resultant pasty material is applied to a foam nickel base plate or substrate, or to a fibrous nickel felt or net-like or latticed porous metal base plate or substrate to get the substrate impregnated or/and coated therewith, and is then dried and pressed to obtain a pasted type nickel electrode plate. This electrode plate is used as a positive electrode of such an alkaline storage battery as a nickel-cadmium storage battery, a nickel hydrogen battery or the like.

With popularization of more portable instruments and appliances in recent years, there has arisen a strong demand for an alkaline storage battery that can provide high-capacity performance and for this reason a nickel electrode of high-performance is very much in need.

Further, it is general that the above-mentioned pasted type nickel electrode is inferior with respect to the utilization coefficient and the rapid or quick discharge characteristic and shorter in the service life as compared with the sintered type nickel electrode. As a means to do away with those drawbacks, it has been proposed that, for the purpose of enhancing the conductivity and minimizing the polarization, the active material primarily of nickel hydroxide powder is prepared to contain a small amount of cobalt hydroxide and additionally a nickel or Ni powder, a cobalt or Co powder, a cobalt oxide or Co0 powder or the like as an electroconductive material, and the resultant mixture thus prepared is kneaded together with an aqueous solution of the thickener to produce the afore-mentioned pasty mixture.

However, there has not been obtained an alkaline storage battery free from the foregoing drawbacks even by using the afore-mentioned paste-type nickel electrode as a positive electrode of the alkaline storage battery. More in detail, there has been manufactured a sealed type nickel-hydrogen alkaline storage battery comprising a battery element consisting of a pasted type nickel electrode containing as its active material a small amount of Co or Co0 content as the electroconductive material as proposed above and used as the positive electrode and a hydrogen-occlusion electrode used as the negative electrode, said positive and negative electrode being stacked one upon another with a separator interposend therebetween, and an alkaline electrolyte solution of such a concentration as high as 30 wt.% or so generally preferably used heretofore, and it has been tested to determine the battery capacity, the rapid discharge capacity and the charge-discharge cycle life thereof. Based on the test results, the coefficient of utilization thereof has been calculated to find out that it was lower than a satisfactory level for both the battery capacity and the rapid discharge capacity and additionally the battery's cycle life was short. A battery having improved performance characteristics in these areas, therefore, would be anvantageons.

A primary object of the present invention is to provide a pasted type nickel electrode for an alkaline storage battery designed to satisfy the above-mentioned desire and enable the battery to give the above-desired high-capacity performance through improvements made with respect to the positive electrode's coefficient of utilization. It is characterized in that it contains as an electroconductive agent a filamentary nickel powder comprising numerous chain-structure portions branching out in the three-dimensional directions, the average diameter of the chain-structure portions being 1.3 µm or smaller. The content of the nickel powder is in the range of about 2 to 25 wt.% based on that of a nickel hydroxide powder in the electrode. The preferred nickel powder is a "INCO nickel powder" type, e.g. INCO # 210 and/or INCO # 205, marketed by INCO Limited and produced by using a carbonyl refining process and therefore subsequently also referred to as "carbonyl nickel powder". These powders have chain portions having an average diameter of about 0.6 to 1.3 µm.

A second object of the present invention is to remove the above-mentioned defects with the alkaline storage battery using as its positive electrode the above-mentioned conventional pasted type nickel electrode plate, and to provide an alkaline storage battery in which the coefficient of utilization of the positive electrode is increased and thereby the battery capacity and rapid discharge characteristics are excellent and the battery life is long. According to the present invention, an alkaline storage battery comprising a battery element consisting of a pasted type nickel positive electrode containing at least one kind of a Co powder and a Co0 powder as an electroconductive agent and a negative electrode, said positive and negative electrodes stacked one upon another with a separator interposed therebetween, and an alkaline electrolyte solution, is characterized in that said alkaline electrolyte solution has a concentration of 35 wt.% or higher.

A particularly preferred embodiment of the present invention is the construction of an alkaline storage battery utilizing a nickel powder having chain portions with an average diameter of 1.3 µm or less as described above with at least one of a Co or Co0 powder in a positive electrode in conjunction with an alkaline electrolyte solution having an alkaline concentration of 35% or higher. This combination is further enhanced when the nickel powder is present as a mixture of two different particle sizes. The nickel powder preferably includes fine particles in mixture with particles of a size greater than the fine particles. A preferred fine particle size is from about 0.8 to 1.3 µm. This avoids the conversion of all of the nickel powder into an active material as further described below.

FIGURE 1 is a graph showing relationship between the positive electrode's coefficient of utilization and an added amount of each type of INCO carbonyl nickel powders having respective different sizes in the average diameter of the chain portions and contained in the positive electrodes.

Figure 2 is a graph showing relationship between the battery capacity and an added amount of each type of INCO carbonyl nickel powders having respective different sizes in the average diameter of the chain portions and contained in the positive electrodes.

Pasted type nickel electrodes for alkaline storage batteries and alkaline stroage batteries according to the present invention are described below including through specific examples of preferred embodiments.

Now, in the following, embodiment examples of the pasted type nickel electrodes for alkaline storage batteries according to the present invention will be described in detail.

In general, a pasted type nickel electrode plate according to the present invention is used as a positive electrode for any kind of alkaline storage batteries such as a nickel-cadmium storage battery, a nickel-hydrogen storage battery or the like in which a pasted type nickel electrode is used as a positive electrode, and, when used, the battery capacity thereof becomes higher than that of the conventional counterpart. Described below is the embodiment examples of the present invention in which the pasted type electrode plate according to the present invention are used as a positive electrode of the nickel-hydrogen storage battery.

### EXAMPLE 1

A pasted type nickel electrode plate for a nickel-hydrogen storage battery according to the present invention was manufactured as follows.
Namely, added to and mixed with a commercially available nickel hydroxide powder comprising spherical particles, which is a main active component of the nickel electrode plate, were a cobalt powder serving as an electroconductive agent and amounting to 5 wt.% based on the nickel hydroxide powder and a commercially available ultra-fine nickel powder INCO # 210, that is, a carbonyl nickel filamentary powder having 0.6 to 1.0 µm in the average diameter of the chain-structure portions and 1.5 to 2.5 m²/g in the specific surface area, serving also as an electroconductive agent and amounting to 10 wt.%. And the resultant mixture was added with a 1.0 wt.% aqueous solution of carboxymethyl cellulose serving as a thickener, and kneaded to obtain a pasty mixture material. The resultant pasty material was applied to a foam nickel base plate or substrate to fill in the pores thereof, and the pasted nickel substrate was dried and thereafter was pressed to a predetermined thickness, so that a pasted type nickel electrode plate according to the present invention was manufactured. The average diameter size of the chain of the carbonyl nickel powder was measured by using a Fisher Subsieve Sizer.

### EXAMPLE 2

In place of the carbonyl nickel powder INCO # 210 in the EXAMPLE 1, another carbonyl nickel powder INCO # 205 having 0.8 to 1.3 µm in the average diameter of the chain-structure portions and 1.3 to 2.0 m²/g in specific surface area thereof was used. Except for that, substantially the same procedures as in the EXAMPLE 1 above were followed to manufacture a pasted type nickel electrode plate according to the present invention.

### COMPARISON EXAMPLE

This Example is a comparison example in relation to Examples 1 and 2. In place of the carbonyl nickel powders INCO # 210 and # 205 as used in Examples 1 and 2 respectively, another carbonyl nickel powder was used; namely INCO # 255. INCO # 255 is also a filamentary powder and has chain portions in the range of 2.2 to 2.8 µm in the average diameter of the chain-structure portions and a specific surface area of 0.5 to 1 m²/g. Except for that, substantially the same procedures as in the EXAMPLE 1 above were followed to manufacture a pasted type nickel electrode plate.

For the purpose of investigation how an added amount of each of the three kinds of carbonyl nickel powders as above, each having a different average diameter size, namely, particle size, would influence the nickel electrode's coefficient of utilization and the battery capacity, said added amount was varied in the range of 0 to 20 wt.% to manufacture various types of the pasted type nickel electrodes in the same manner as in the EXAMPLE 1.

In the comparisons test, the positive electrodes of EXAMPLES 1-3 were used with a hydrogen-occlusion alloy negative eletrode plate. The negative electrode was manufactured as follows. Namely, commercially available misch metal (Mm), Ni, Co and Al powders were each weighed and mixed for a predetermined compounding ratio. This mixture was then heated and melted by a high-frequency melting procress to obtain a hydrogen-occlusion alloy whose composition was expressed as MmNi_{3.55}Co_{1.0}AL_{0.05}. This alloy was pulverized into a hydrogen-occlusion alloy powder whose particle size was 0.104 mm (150 mesh) or smaller. Added to and mixed with this alloy powder were a carbonyl nickel powder serving as an electroconductive agent and amounting to 15 wt.% based on the alloy powder taken as 100 weight part and a polyvinylidene fluoride powder serving as a binding agent and amounting to 3 wt.% also based on the alloy powder. A 1 % aqueous solution of carboxymethyl cellulose was added to the resultant mixture as above, and kneaded together to prepare the mixture slurry or pasty. The resultant pasty mixture was applied to a nickel-plated, perforated or porous iron plate or substrate, and the resultant pasted type substrate was dried and roll-pressed, and thereafter was heated at 200°C for two hours to manufacture a hydrogen-occlusion alloy electrode plate.

Each of the above-mentioned various types of pasted type nickel electrode plates and the above-mentioned hydrogen-occlusion electrode plate were stacked on upon another with a nylon separator interposed therebetween to make up a battery element. This battery element was rolled into a spiral form, and the spiral battery element was inserted into a cylindrical metal container. A predetermined quantity of an ordinary electrolyte solution of caustic potash or potassium hydroxide was poured into the container, and a cover was attached thereto to seal it, thereby manufacturing a positive electrode-controlled, UM-3 size nickel-hydrogen battery having the positive electrode's theoretical capacity rated as 1180 mAh.

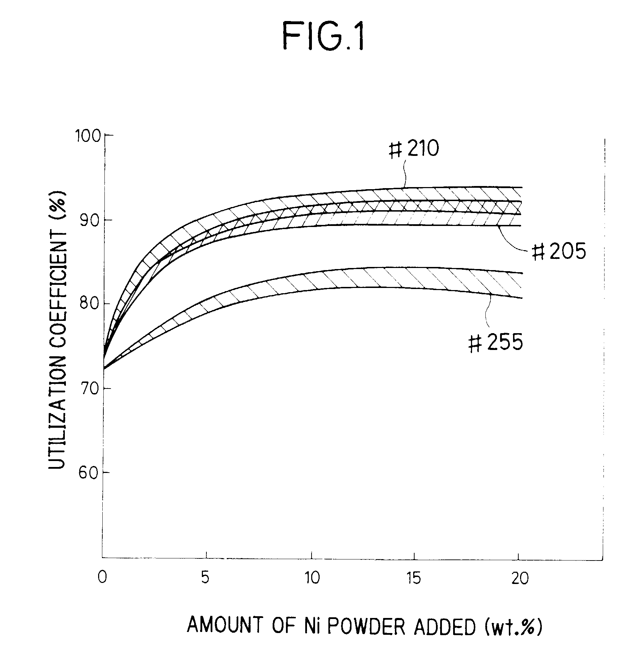

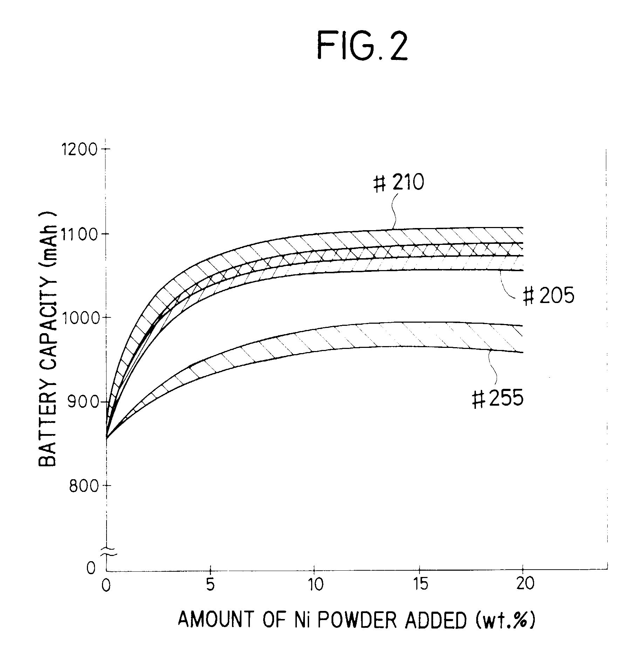

The respective batteries manufactured as above were tested in the following manner to determine their utilization coefficients and battery capacities. Namely, the test was so carried out that each battery was charged with 200 mAh current for 7.5 hours and then discharged with the same current to the final battery voltage of 1.0 Volt (V) to determine the battery capacity. The value obtained by dividing the value of the battery capacity by the theoretical capacity of the positive electrode was taken as the positive electrode's coefficient of utilization. Tho results thereof are as shown in FIGURE 1 and FIGURE 2.

As clearly seen from FIGURE 1 and FIGURE 2, when nickel powder INCO # 210 or # 205 was used as the electroconductive agent to be contained in the positive electrode, the battery capacity and the positive electrode's coefficient of utilization were both much higher as compared with the case where nickel powder # 255 was used as the electroconductive agent. Namely, it has been found that when nickel powder of which the average diameter of the chain-structure portions is 1.3 µm or less is used as the electroconductive agent, the battery capacity and the positive electrode's coefficient of utilization can be improved remarkably. A combined use of INCO # 210 and # 205 gives the same advantageous effect as obtained with use of either INCO # 210 or INCO # 205 alone.

As far as the coefficient of utilization of the positive electrode, a 85 % or higher coefficient of utilization is generally considered as desirable, and accordingly an addition amount of the carbonyl nickel powder is preferably about 2.0 wt.% or higher based on the weight of the active powder such as nickel hydroxide powder. On the other hand, taking into account the capacity of the positive electrode itself and further from an economical point of view, it is preferable to keep the addition amount thereof not to exceed about 25 wt.% taken as the upper limit.

Thus, when a pasted type nickel electrode is manufactured by using a positive active material mixed with a nickel powder which is structured by numerous chains, each of which is formed by a series of beads, branching out in the three dimensional directions, the chain-structured portions being 1.3 µm or less in average diameter, and is used as the electroconductive agent in an alkaline storage battery, the positive electrode's coefficient of utilization is enhanced and there is obtained a high-capacity, long-life storage battery.

A second and separate embodiment of the present invention provides an alkaline storage battery having an improved battery capacity and rapid discharge characteristics and includes a pasted type nickel positive electrode plate containing a Co powder and/or a CoO powder as the electroconductive agent, an alkaline electrolyte solution having a concentration of 35 wt.% or more. This combination includes a nickel filamentary powder as described above with the Co and/or CoO powder.

The CoO powder contained in the positive electrode becomes HCoO₂-ions when dissolved in the alkaline electrolyte solution. These ions diffuse into spaces between the particles of the active material powder or, if a nickel powder is additionally used as the electroconductive agent, into those between the particles of the Ni powder. And as the battery is charged, they are oxidized to be formed into CoOOH which functions as an electroconductive agent. The Co powder itself is not dissolved in the alkaline electrolyte solution, but it is thought that the dissolved oxygen (DO) in the alkaline electrolyte solution works on the Co powder and oxidizes it to form CoO which further becomes HCoO₂-ions to function just as described in the foregoing. When the concentration of the alkaline component in the electrolyte solution is made 35 wt.% or higher as above according to the present invention, the foregoing operation or working is more conspicuous and effective to bring about a higher coefficient of utilization of the positive electrolyte.

In this case, use of the Ni powder in combination with the Co powder or/and the CoO powder as the electroconductive agent is more desirable. The nickel powder does not function to assure the conductivity in the micro region involving the CoO powder or the Co powder or the Co powder, but does to secure conductivity in the macro region involving spaces between the particles of the active material. In addition, part of the Ni powder is changed into the active material in the course of the charging operation and it is thought that this phenomenon of the Ni powder turning to the active material is more conspicuous when the concentration of the electrolyte solution is higher.

Nevertheless, should all the Ni powder have turned to the active material, it would lose its capability of functioning as an electroconductive agent. Therefore, the Ni powder should be of such a mixed type that it comprises not only fine particles but also more coarse ones larger in the particle size than the former. It is in general that the nickel powder having the average particle size ranging from 0.8 to 1.3 µm is used as a fine powder and the nickel powder having the average particle size greater than the foregoing average particle size is used as a coarse powder.

Next, more details of the second embodiment of the present invention will be explained as follows.

### EXAMPLE 3

In the first place, the following there kinds, A, B and C, of the pasted type nickel electrode plate are manufactured as follows.

Manufacturing of the electrode plate A:
10 grams of a commercially available Ni powder INCO # 255, 5 grams of a commercially available Co powder (UM, Extra Fine Co Powder) and a commercially available nickel hydroxide comprising spherical particles were compounded and well mixed together. 35 grams of a 2 % water solution of carboxymethyl cellulose was added to the mixture obtained above, and kneaded together to make the mixture pasty. This pasty mixture was applied to a foam nickel substrate so as to have the pores of the subtrate filled up therewith, and then dried, and was then impregnated with a 5 % polytetrafluoroethylene (PTFE) solution serving as a dispersant, and was dried and finally rolled-pressed to a predetermined thickness to manufacture a pasted type nickel electrode plate A.

Manufacturing of the electrode plate B:
10 grams of the foregoing Ni powder INCO # 255, 5 grams of a commercially available CoO powder (FCC-178 manufactured by Sumitomo Kinzoku Kozan K.K.) and 85 grams of the foregoing spherical nickel hydroxide powder were compounded and well mixed together. Using the mixture thus obtained, substantially the same procedures as in the manufacturing of the electrode plate A were thereafter carried out to manufacture a pasted type nickel electrode plate B.

Manufacturing of the electrode plate C:
5 grams of the foregoing Ni powder INCO # 255, 5 grams of a commercially available Ni powder INCO # 210 which is smaller in the particle size than the Ni powder INCO # 255, and 5 grams of the foregoing CoO powder FCC-178 were compounded and well mixed together. Using the mixture thus obtained, substantially the same procedures as in the manufacturing of the electrode plate A were thereafter carried out to manufacture a pasted type nickel electrode plate C.

Each of these pasted type nickel electrode plates A, B and C were rated at 1180 mAh in term of the theoretical capacity.

Next, using each of these electrode plates A, B and C as a positive electrode and a hydrogen-occlusion alloy electrode plate comprising a MmNi system hydrogen-occlusion alloy, as a negative electrode, a battery element was assembled by stacking them in a laminate fashion with a separator interposed therebetween and rolling them into a spiral form. Each of these three kinds of the spiral battery elements was inserted into a cylindrical can or container of the same size. Five of each type of battery container were thus manufactured.

Various kinds of alkaline electrolyte solutions having different concentrations including 25 %, 30 %, 35 %, 37 % and 39 % and composed mainly of KOH and a small amount of NaOH and LiOH as the remainder components, were prepared and a predetermined equalquantity, for instance, 2 cubic centimeter (cc) of one of these electrolyte solutions was poured into each of these batteries and a cover was immediately attached thereto to seal the battery container by a known ordinary process. In this manner, a plurality of sealed type UM-3 size nickel-hydrogen batteries having the rated capacity of 1100 mAh were manufactured.

Each of these batteries was charged with 0.2 C current at an ambient temperature of 20°C for 7.5 hours and then discharged with the same current to the final voltage of 1.0 V. This charge-discharge operation was repeated twice. Thereafter, each battery was given the initial activation treatment including the discharge that continued for 24 hours at 40°C. After the initial activation, the following tests were carried out.
(1) Capacity test:
   Each test battery was charged with 0.2 C current for 7.5 hours at 20°C and discharged with 3 C current to the final battery voltage of 1.0 V to measure the capacity thereof and determine the positive electrode's coefficient of utilization.
(2) Rapid discharge test:
   Each test battery was charged with 0.2 C current for 7.5 hours at 20°C and discharged with 3 C current to the final battery voltage 1.0 V to measure the capacity thereof and determine the positive electrode's coefficient of utilization.
(3) Cycle life test:
   Each test battery was charged with 1 C current by using a - ΔV system at 20°C, and discharged with 3 C current to the final battery voltage of 1.0 V. This charge-discharge operation was repeated until the battery capacity dropped to 700 mAh to determine the number of the charge-discharge cycles.

The results obtained from the above tests are shown in Table 1 below.

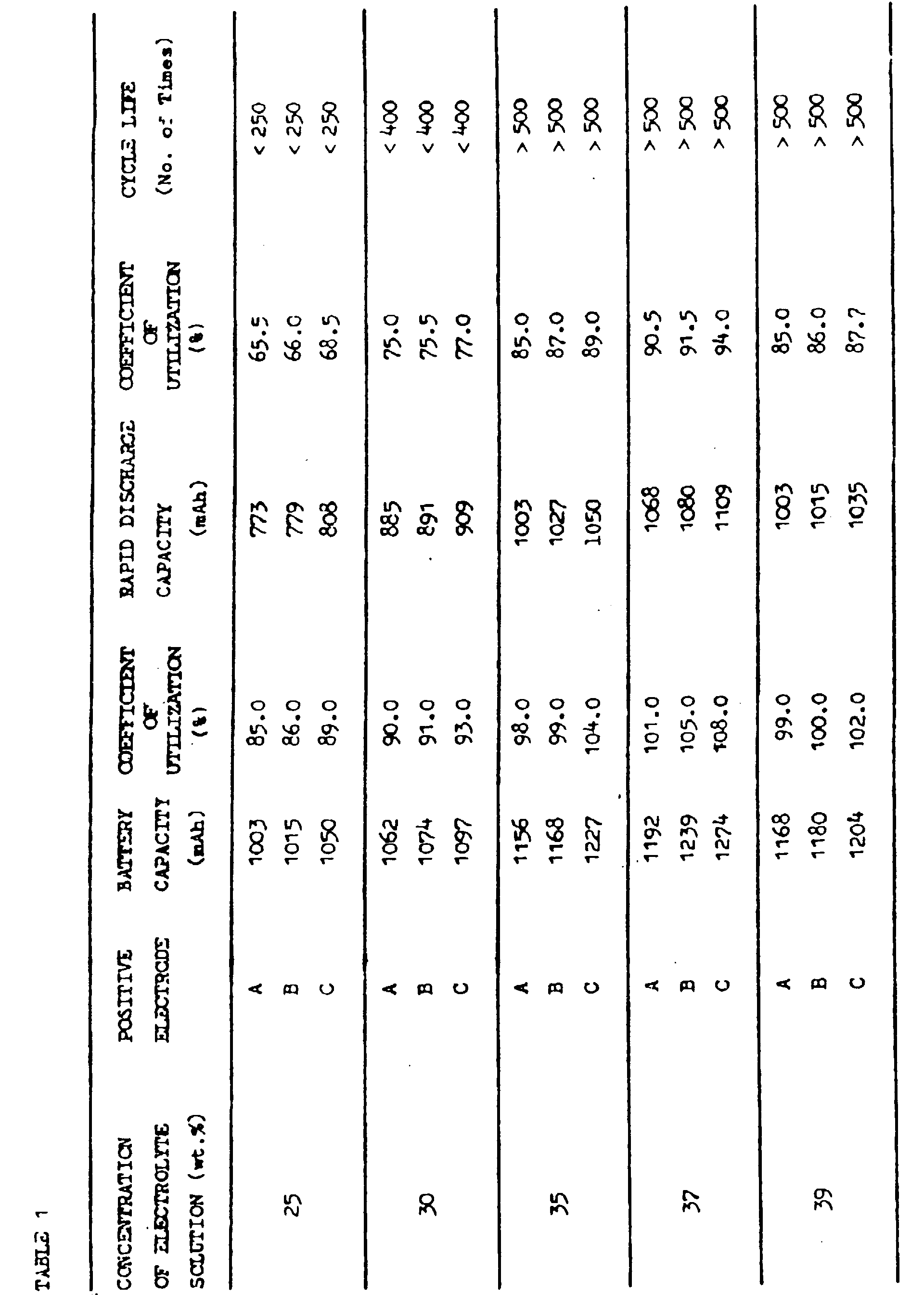

As clearly seen from Table 1, the battery capacity and the positive electrode's coefficient of utilization and the rapid discharge capacity and the positive electrode's coefficient of utilization were all low and the cycle life was also very short with 250 cycles or less when the concentration of alkaline electrolyte solution was 25 wt.%. When the concentration thereof was 30 wt.%, both the battery capacity and the positive electrode's coefficient of utilization in relation thereto were found satisfactorily enhanced, but the rapid discharge capacity and the positive electrode's coefficient of utilization in relation thereto were found insufficient, and in addition, the cycle life was as short as 400 cycles or less.

Compared with the above, when the concentration of the alkaline electrolyte solution was 35 wt.% or higher, the battery capacity and the positive electrode's coefficient of utilization in relation thereto as well as the rapid discharge capacity and the positive electrode's coefficient of utilization in relation thereto were all found remarkably enhanced and also the cycle life was al long as 500 cycles or more.

The same tests as described above were made on alkaline storage batteries in each of which the positive electrode was a pasted type nickel electrode containing a mixture of the Co powder and CoO powder as the electroconductive agent, and which have such different electrolyte solutions in concentration as mentioned above.

As a result, it has been found that they also showed the similar improvements as in the above with respect to the above-mentioned battery capacity, the positive electrode's coefficient of utilization and the rapid discharge characteristics.

Instead of using the above-mentioned electroconductive agent comprising a Co powder, a CoO powder, a Ni powder or the like as the are, it may be used in such a manner that in the first place, it may be subjected manually or mechanically to a pulverization treatment by using a mortar or a mill such as a ball, and then mixed with a nickel hydroxide active material to prepare the mixture for use or that in the first place, any conductive agent and the nickel hydroxide material are mixed together and then are subjected to the pulverization treatment to prepare the mixture fur use.

Further, it is even desirable to use as the active material a nickel hydroxide powder containing a small amount of cobalt hydroxide, say, about 1 wt.% based on the nickel hydroxide.

Furthermore, when the alkaline electrolyte comprises the three components of KOH, NaOH and LiOH, it is desirable to have the KOH component in a major amount, i.e. accounting for 75 wt.% or more based on the total weight of the three components. The alkaline electrolyte may be composed of KOH alone or of two components of NaOH and LiOH.

Thus, according to the present invention, in an alkaline storage battery in which a pasted type nickel electrode plate containing at least one of a Co powder and a CoO powder serving as an electroconductive agent is used as a positive electrode, when the concentration of the alkaline electrolyte solution is 35 wt.% or higher, there can be obtained an alkaline storage battery featuring an increased coefficient of utilization of the positive electrode, superb rapid discharge characteristics and a long battery life. In this case, especially when a nickel powder having a network of three-dimensional chains with an average diameter of 1.3 µm or less is used as the electroconductive agent or when a mixture of a smaller particle-sized nickel powder and a larger particle-sized nickel powder is used as the electroconductive agent, there can be obtained an alkaline storage battery offering more excellent performance.

## Claims

1. An alkaline storage battery comprising a battery element assembled by stacking a pasted type nickel positive electrode plate containing an electroconductive agent and a negative electrode plate with a separator interposed therebetween, and an alkaline electrolyte solution, characterized in that said electroconductive agent comprises a nickel filamentary powder the particles of which comprise numerous particles branching out in the three-dimensional directions, the average diameter of the particles being 1.3 µm or less.

2. An alkaline storage battery as claimed in claim 1, wherein said alkaline electrolyte solution has a concentration of 35 wt. % or higher.

3. An alkaline storage battery as claimed in claim 1, wherein the electroconductive agent further comprises a Co powder or/and a CoO powder.

4. An alkaline storage battery as claimed in any of claims 1 and 2, wherein the electroconductive powder comprises a mixture of a Ni powder of fine particles and a Ni powder of a size larger than said former one.

5. An alkaline storage battery as claimed in claim 4, wherein the Ni powder of smaller sized particles is a nickel powder, having an average diameter of from about 0.6 to 1.3 µm.

6. An alkaline storage battery as claimed in claim 1, wherein the alkaline electrolyte solution has a concentration in the range of 35 to 39 wt. %.

7. An alkaline storage battery as claimed in claim 1, wherein the alkaline electrolyte solution comprises KOH, NaOH and LiOH, the main component thereof being KOH.

## Patentansprüche

1. Alkalische Speicherbatterie, die ein Batterieelement und eine alkalische Elektrolytlösung umfaßt, wobei das Batterieelement zusammengesetzt wird durch Stapeln einer pastösen, ein elektrisch leitendes Mittel enthaltenden, positiven Nickelelektrodenplatte und einer negativen Elektrodenplatte und ein Trennelement zwischen diesen angeordnet ist,
**dadurch gekennzeichnet**, daß das elektrisch leitende Mittel ein fadenförmiges Nickel-pulver enthält, dessen Teilchen zahlreiche Teilchen aufweisen, die in dreidimensionale Richtungen verzweigen, wobei der durchschnittliche Durchmesser der Teilchen 1,3 µm oder weniger beträgt.

2. Alkalische Speicherbatterie nach Anspruch 1,
wobei die alkalische Elektrolytlösung eine Konzentration von 35 Gew.-% oder mehr aufweist.

3. Alkalische Speicherbatterie nach Anspruch 1,
wobei das elektrisch leitende Mittel weiter ein Co-Pulver und/oder ein CoO-Pulver enthält.

4. Alkalische Speicherbatterie nach einem der Ansprüche 1 oder 2,
wobei das elektrisch leitende Pulver ein Gemisch eines Nickel-Pulvers feiner Teilchen und eines Nickel-Pulvers mit gegenüber dem zuerst genannten größeren Abmessung umfaßt.

5. Alkalische Speicherbatterie nach Anspruch 4,
wobei das Nickel-Pulver mit kleineren Teilchen ein Nickel-Pulver mit einem durchschnittlichen Durchmesser von etwa 0,6 bis 1,3 µm ist.

6. Alkalische Speicherbatterie nach Anspruch 1,
wobei die alkalische Elektrolytlösung eine Konzentration im Bereich von 35 bis 39 Gew.-% aufweist.

7. Alkalische Speicherbatterie nach Anspruch 1,
wobei die alkalische Elektrolytlösung KOH, NaOH und LiOH enthält, wobei die Hauptkomponente davon KOH ist.

## Revendications

1. Batterie d'accumulateurs alcalins comprenant un élément de batterie assemblé en empilant une plaque de type pâte formant l'électrode positive de nickel et contenant un agent électroconducteur, et une plaque formant l'électrode négative avec un séparateur placé entre elles, et une solution d'électrolyte alcalin, caractérisée en ce que ledit agent électroconducteur comprend une poudre filamenteuse de nickel dont les particules comprennent de nombreuses particules ramifiées dans les trois directions dimensionnelles, le diamètre moyen des particules valant 1,3 µm ou moins.

2. Batterie d'accumulateurs alcalins conforme à la revendication 1, dans laquelle ladite solution d'électrolyte alcalin présente une concentration de 35 % en poids ou plus.

3. Batterie d'accumulateurs alcalins conforme à la revendication 1, dans laquelle l'agent électroconducteur comprend en outre une poudre de Co et/ou une poudre de CoO.

4. Batterie d'accumulateurs alcalins conforme à l'une quelconque des revendications 1 et 2, dans laquelle la poudre élctroconductrice comprend un mélange de poudre de Ni dont les particules sont fines, et une poudre de Ni dont les particules sont plus grandes que celles de ladite poudre précédente.

5. Batterie d'accumulateurs alcalins conforme à la revendication 4, dans laquelle la poudre de Ni dont les particules sont de plus petite taille, est une poudre de nickel présentant un diamètre d'environ 0,6 à 1,3 µm.

6. Batterie d'accumulateurs alcalins conforme à la revendication 1, dans laquelle la solution d'électrolyte alcalin présente une concentration comprise dans l'intervalle allant de 35 à 39 % en poids.

7. Batterie d'accumulateurs alcalins conforme à la revendication 1, dans laquelle la solution d'électrolyte alcalin comprend du KOH, du NaOH et du LiOH, le composant principal de cette solution étant le KOH.
